Europäisches Patentamt

European Patent Office

Office européen des brevets

(11) Publication number: **0 161 923 B1**

(12) **EUROPEAN PATENT SPECIFICATION**

(45) Date of publication of patent specification: **30.03.94** (51) Int. Cl.⁵: **H04N 9/78**

(21) Application number: **85303325.6**

(22) Date of filing: **10.05.85**

(54) A separating filter of luminance and chrominance signals of pal system.

(30) Priority: **11.05.84 JP 95109/84**
**11.05.84 JP 95110/84**

(43) Date of publication of application:
**21.11.85 Bulletin 85/47**

(45) Publication of the grant of the patent:
**30.03.94 Bulletin 94/13**

(84) Designated Contracting States:
**DE GB NL**

(56) References cited:
**US-A- 4 141 035**

**PATENT ABSTRACTS OF JAPAN, vol. 7, no. 239 (E-206)[1384], 25th October 1983; &JP-A-58 129 890 (TOKYO SHIBAURA DENKI K.K.) 03-08-1983**

(73) Proprietor: **MITSUBISHI DENKI KABUSHIKI KAISHA**
**2-3, Marunouchi 2-chome**
**Chiyoda-ku**
**Tokyo 100(JP)**

(72) Inventor: **Mizutani, Yoshiki**
**9-20 Shonainishimachi 3-chome**
**Toyonaka-shi Osaka-fu(JP)**
Inventor: **Nakajima, Yoshimitsu**
**D-510, No. 10, Misawa-cho**
**Ibaragi-shi Osaka-fu(JP)**

(74) Representative: **Beresford, Keith Denis Lewis et al**
**BERESFORD & Co.**
**2-5 Warwick Court**
**High Holborn**
**London WC1R 5DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

FIELD OF THE INVENTION

The present invention relates to a filter for separating luminance signals and chrominance signals (hereinafter referred to as the YC separating filter) whereby the luminance signals (hereinafter referred to as the Y signals) and the chrominance signals (hereinafter referred to as the C signals) are separated and extracted from composite television signals (composite video signals) of a PAL system (phase alternative by line color system). More particularly, the present invention relates to a system under which the analog composite television signals of PAL system are converted into digital signals, which are subsequently separated into Y and C signals.

BACKGROUND OF THE INVENTION

Under the current standard color television system the Y and C signals are transmitted as frequency-multiplexed composite signals. Accordingly it is required for the receivers to separate the Y and C signals distinctly from the composite signals received thereat.

The composite television signals P of PAL system consists of the Y signal, and the C signal which is produced by executing a quadrature two-phase modulation to two color difference signals U and V (alternatively, I and Q) by a color sub-carrier frequency fsc. The P is expressed as follows:

$$P = Y + C$$

$$= Y + U \cdot \sin (2\pi \text{fsc } t) \pm V\cos (2\pi \text{ fsc } t)$$

where the ± means the " + " for the odd scanning lines and the "-" for the even scanning lines. This means that the V components are reversed in every scanning line. Suppose that the frame frequency be fF (25Hz), the field frequency fV (50Hz), the horizontal scanning frequency be fH (15.625KHz), the following relationship is established between these and the above-mentioned fsc:

$$\text{fsc} = (284 - 1/4 + 1/625) \text{ fH}$$

$$= (284 - 1/4 + 1/625) \, 625 \cdot \text{fV}/2$$

$$= (284 - 1/4 + 1/625) \, 625\text{fF}$$

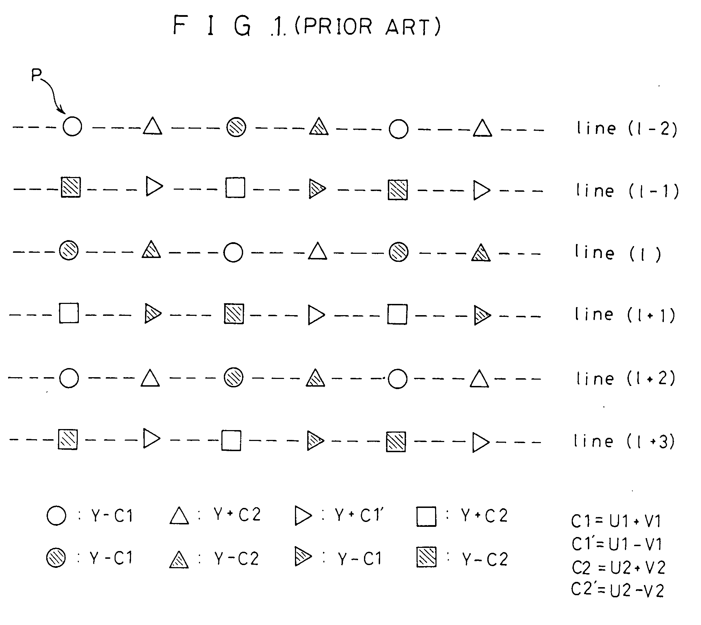

It will be understood from this relationship that the fsc and fH are in the 1/4 line off-set relationships. For this reason a sample signal series obtained from the composite television signals of PAL system being synchronuously sampled with a sampling frequency fs of four times the color sub-carrier frequency is represented in a two-dimensional array on the screen as shown in Figure 1. It will be understood from Figure 1 that the phases of the color signals are repeated at each of four lines. In Figure 1 the rectangles, circles and triangles show sampling points Ps, and the Y shows luminance signals, and the C1, C2, C1', and C2' show color signals, the U1, U2, V1 and V2 show color difference signals, respectively.

In order to secure the compatibility with monochrome television signals, it is required that the receivers can separate Y and C signals exactly from the composite color television signals containing C signals which are frequency-multiplexed in such a manner that the spectrum frequency-interleaves in the frequency band of the Y signals.

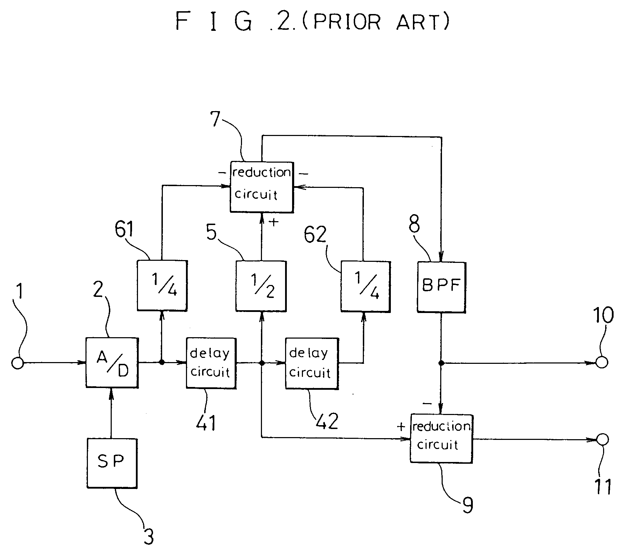

Figure 2 shows an example of the known Y-C separating filter:

There are provided an input terminal 1 for analog composite television signals of PAL system, and A/D converter 2, a sampling pulse generator (SP) 3, and first and second delay circuits 41 and 42 (two line memory) for delaying the sampling signals from the A/D converters two horizontal scanning periods. The reference numerals 5, 61 and 62, and 7 designate a 1/2 times multiplication circuit, first and second 1/4 times multiplication circuits, and a reduction circuit, respectively. The last-mentioned reduction circuit 7 is designed to reduce the output of the first and second 1/4 times multiplication circuits 61 and 62 from that of the circuit 5. The reference numerals 8 and 9 designate a horizontal band-pass filter, and a second

2

reduction circuit, respectively, the latter being designed to reduce the output of the filter 8 from the output of the first delay circuit 41. The reference numeral 10 designates an output terminal of the horizontal band-pass filter 8, and the numeral 11 designates an output terminal of the second reduction circuit 9. The circuit of Figure 2 is operated as follows:

The sampling pulse generator 3 is an oscillator which synchronuously oscillates at a frequency fs of four times the color sub-carrier frequency fsc of the composite television signals which are applied to the input terminal 1. The output of the generator 3 is applied to the A/D converter 2, in response to which the A/D converter digitizes the analog signals applied to the input terminal 1. The sampled signal series which are obtained by sampling the composite color television signals of PAL system at the sampling frequency: fs = 4fsc, show the patterns on the screen shown in Figure 1 when the phases of C signals are noted. As evident from Figure 1, the phase of C signals periodically changes in a period of four lines, it will be understood that the phase of the color sub-carrier of its chrominance signal component is reversed 180° on the lines ($\ell$-2) and ($\ell$+2) two lines up and below of the line ($\ell$). The 1/2 times circuit 5 multiplies the output of the 1st delay circuit 41 1/2 times, the output of which is spplied to the reduction circuit 7. The 1st 1/4 times circuit 61 multiplies the output of the A/D converter 2 1/4 times, the output of which is applied to the reduction circuit 7. The 2nd 1/4 times circuit 62 multiplies the output of the 2nd delay circuit 42 1/4 times, the output of which is applied to the reduction circuit 7. The reduction circuit 7 reduces the outputs of the 1st 1/4 times circuit 61 and the 2nd 1/4 times circuit 62 from that of the 1/2 times circuit 5. Therefore, the output of the reduction circuit 7 Hc ($\ell$, m) is expressed by:

$$Hc\ (\ell, m) = 1/4\ \{ - P\ (\ell - 2, m) + 2P\ (\ell, m) - P\ (\ell + 2, m)\}$$

where the P($\ell$, m) is the sample value at the (m)th sampling point on the ($\ell$)th line, and the P($\ell$+2, m) is a sample signal, which is the output of the A/D converter 2. The P($\ell$, m) is the signal to be separated, which is the output of the 1st delay circuit 41. The P($\ell$-2, m) is a sample signal which is the output of the 2nd delay circuit 42. The output signal of the reduction circuit 7 Hc($\ell$, m) is applied to the horizontal band-pass filter 8, which is a filter adapted to pass the chrominance signal component and to remove the Y signal component in the output signal Hc($\ell$, m). This filter can be constructed on the following formula:

$$Hh\ (Z) = -1/32 \cdot (1 - Z^{-2})^2\ (1 + Z^{-4})^2\ (1 + Z^{-8})$$

It will be understood from the formula that the C signal is obtained from the output of the horizontal band-pass filter 8.

The reduction circuit 9 reduces the output of the horizontal band-pass filter 8 from that of the 1st delay circuit 41, which means that the circuit 9 reduces the chrominance signal (C) from the composite television signal (P). Thus the Y signal is obtained in the output of the reduction circit 9. The output terminals 10 and 11 are connected to the horizontal band-pass filter 8, and the reduction circuit 9, respectively, from which it will be understood that the C signal is obtained at the terminal 10, and that the Y signal is obtained at the terminal 11.

As evident from the foregoing description, the conventional filter for separating the Y- and C-signals comprises a combination of a horizontal and vertical filters fixed together. In addition, the conventional system is on the presumption that the picture elements as the sample value series of television signals which are adjacent to each other on the screen are similar with each other. Consequently, in an area where the luminance and chrominance of picture rapidly change, the Y signal and C signal are likely to leak into each channel, thereby causing cross-color and cross-luminance distortion. This spoils the quality of the reproduction of pictures.

Prior art document United States patent 4,141,035, Maxemchuk et al, discloses a technique for separating composite video signals. Chrominance and luminance component estimates for the vertical and horizontal directions are compared with previously chrominance and luminance components to establish which of the pairs of estimates is the closest. As such if there is any error in the separation there may be a tendency for errors to propagate. The present invention addresses the problem of providing a more accurate separation of luminance and chrominance signals. The means by which this is achieved has the incidental advantage that such error propagation is avoided.

## OBJECTS AND SUMMARY OF THE INVENTION

The present invention is directed to overcome the problems pointed out above, and provides a YC separating filter of PAL system wherein the input composite color television signals are converted into digital signals by sampling signals having a frequency of four times the color sub-carrier frequency, and the luminance signals and chrominance signals are separated from each other, which secures an exact separation with the use of a one-line memory and without the use of a two-line memory.

According to the present invention, there is provided a filter for separating luminance and chrominance signals from the composite television signals of PAL system, as set out in claim 1, and a method for separating the luminance and chrominance components of a composite television/video signal as set out in claim 10.

BRIEF DESCRIPTION OF THE DRAWINGS

Figure 1 is a diagrammatic view showing series of sample signals obtained by sampling the composite television video signals of PAL system at a sampling frequency of four times that of the color sub-carrier wave;

Figure 2 is a circuit diagram showing a conventional filter for separating luminance and chrominance signals;

Figure 3 is a circuit diagram showing a filter of one embodiment of the present invention;

Figure 4 is a diagrammatic view showing series of sample signals obtained when the composite television video signals of PAL system are sampled under the present invention;

Figures 5 and 6 are diagrammatic views each showing the operation of the filter shown in Figure 3;

Figure 7 is a circuit diagram showing a modified version of the embodiment;

Figure 8 is a diagrammatic view showing series of sample signals obtained in the modified version of Figure 7; and

Figures 9 and 10 are diagrammatic views each showing the operation of the filter shown in Figure 7.

DETAILED DESCRIPTION OF THE PREFERRED EMBODIMENTS

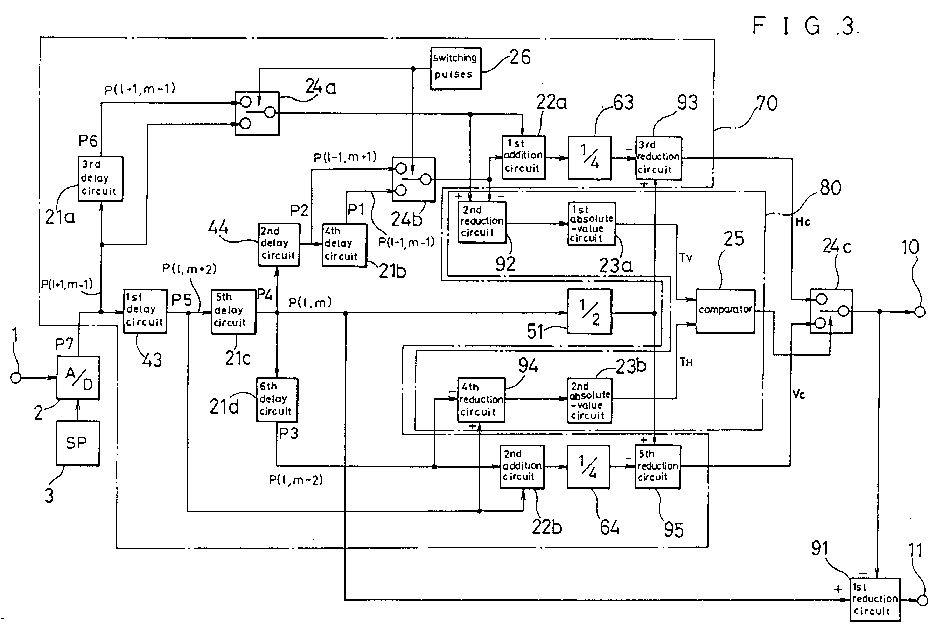

Referring to Figure 3, the reference numerals 1 and 3 designate an input terminal for receiving composite color television signals in analog form, which contain Y and C signals, and a sampling signal generator which comprises a sampling pulse generating circuit (SP), respectively. The reference numeral 2 designates an A/D converter for converting the composite color television signals in analog form into digital signals by the sampling signals from the sampling signal generator 3. The reference numerals 43 and 44 designate first and second delay circuits (one line memory) designed to delay the signals received thereat by a shorter period of time by one sampling period than one horizontal scanning period. The reference numerals 21a, 21b, 21c and 21d designate third, fourth, fifth and sixth delay circuits designed to delay the signals received thereat by two sampling periods. A sample signal generator is constituted by these 1st to 6th delay circuits, which generator outputs the signal to be separated and 1st to 6th sample signals on the basis of the digital signals from the A/D converter 2. The signal to be separated $P(\ell, m)$ is a signal output from the 5 th delay circuit 21c, the 1st sample signal $P(\ell\text{-}1, m\text{-}1)$ is output from the 4th delay circuit 21b, and is a signal delayed a longer period of time by one sampling period than one horizontal scanning period as compared with the signal to be separated, the 2nd sample signal $P(\ell\text{-}1, m+1)$ is output from the 2nd delay circuit 44, and is a signal delayed a longer period of time by one sampling period than one horizontal scanning period as compared with the signal to be separated, the 3rd sample signal $P(\ell, m\text{-}2)$ is output from the 6th delay circuit 21d, and is a signal delayed two sampling periods as compared with the signal to be separated, the 4th sample signal $P(\ell, m+2)$ is output from the 1st delay circuit 43, and is a signal advanced two sampling periods as compared with the signal to be separated, the 5th sample signal $P(\ell+1, m\text{-}1)$ is output from the 3rd delay circuit 21a, and is a signal advanced a shorter period of time by one sampling period than one horizontal scanning period as compared with the signal to be separated, the 6th sample signal $P(\ell+1, m+1)$ is output from the A/D converter 2, and is a signal advanced a longer period of time by one sampling period than one horizontal scanning period as compared with the signal to be separated. The reference numeral 26 designates a switching pulse generator which outputs first and second state signals having "H" level and "L" level, respectively. The reference numeral 24a designates a second switching circuit which, receiving the 5th and 6th sample signals from the 3rd delay circuit 21a and from the A/D converter 2, respectively, selectively outputs the 5th sample signal in response to the 1st state signal from the switching signal generator 26, and the 6th smaple signal in response to the second state signal. The reference numeral 24b designates a first switching circuit which, receiving the 2nd sample signal from the 2nd delay circuit 44 and the 1st sample signal from the 4th delay circuit 21b, selectively outputs the 2nd sample signals in response to the 1st state signal from the switching signal generator 26, and the 1st sample signal in response to the 2nd state signal. The reference numeral 92 designates a

4

second reduction circuit which outputs a difference signal between the selected output from the 1st switching circuit 24b and the selected output from the 2nd switching circuit 24a. The reference numeral 23a designates a 1st absolute-value circuit which outputs the absolute value of the difference signal from the 2nd reduction circuit 92 as Tv signal. This circuit 23a constitutes a Tv signal generator with the 2nd reduction circuit 92.

The reference numeral 94 designates a 4th reduction circuit which outputs a difference signal between the 4th sample signal from the 1st delay circuit 43 and the 3rd sample signal from the 6th delay circuit 21d, and the reference numeral 23b designates a 2nd absolute-value circuit which outputs the absolute value of the difference signal from the 4th reduction circuit 94 as $T_H$ signal, which constitutes a $T_H$ signal generator with the 4th reduction circuit 94. The reference numeral 25 designates a comparator which compares between the Tv signal from the 1st absolute-value circuit 23a and the $T_H$ signal from the 2nd absolute-value circuit 23b, and outputs a first state signal when the Tv is smaller than the $T_H$, whereas it outputs a second state signal when the $T_H$ is smaller than the Tv. The Tv signal generator, the $T_H$ signal generator and the comparator 25 constitute a detector circuit 80 which detects a direction in which the composite television signals have less variation. The reference numeral 22a designates a first addition circuit which outputs the sum of the selected output from the 1st switching circuit 24b and that from the 2nd switching circuit 24a. The reference numeral 63 designates a first multiplication circuit which multiplies the output of the first addition circuit 22a 1/4 times. The reference numeral 51 designates a third multiplication circuit which multiplies the signal to be separated from the 5th delay circuit 21c. The reference numeral 93 designates a third reduction circuit which outputs a difference signal between the output signal from the 3rd multiplication circuit 51 and that from the 1st multiplication circuit 63 as Hc signal which is a chrominance signal in the horizontal direction. This circuit 93 constitutes a Hc signal generator in combination with the 1st addition circuit 22a, the 1st multiplication circuit 63, and the 3rd multiplication circuit 51. The reference numeral 22b designates a second addition circuit which outputs the sum of the 4th sample signal from the 1st delay circuit 43 and the 3rd sample signal from the 6th delay circuit 21d. The reference numeral 64 designates a second multiplication circuit which multiplies the output of the second addition circuit 22b 1/4 times. The reference numeral 95 designates a fifth reduction circuit which outputs a difference signal between the output signal from the 3rd multiplication circuit 51 and that from the 2nd multiplication circuit 64 as chrominance signal Vc in the vertical direction. This circuit 95 constitutes a Vc signal generator in combination with the 2nd addition circuit 22b and the 2nd multiplication circuit 64. The sample signal generator, the Hc signal generator, and the Vc signal generator constitute a vertical-direction filter and a horizontal-direction filter 70. The reference numeral 24c designates a selecting device which, receiving the Hc signal from the 3rd reduction circuit 93 and the Vc signal from the 5th reduction circuit 95, and also receiving the first and second state signals from the comparator 25, selectively outputs the Hc signal as chrominance signal to an output terminal 10 for chrominance signal in response to the first state signal, and selectively outputs the Vc signal as chrominance signal to the output terminal 10 in response to the second state signal. The reference numeral 91 designates a first reduction circuit which outputs a difference signal between the signal to be separated from the 5th delay circuit 21c and the chrominance signal of the selected output from the selecting device 24c to an output terminal for luminance signal as luminance signal 11.

The circuit shown in Figure 3 is operated as follows:

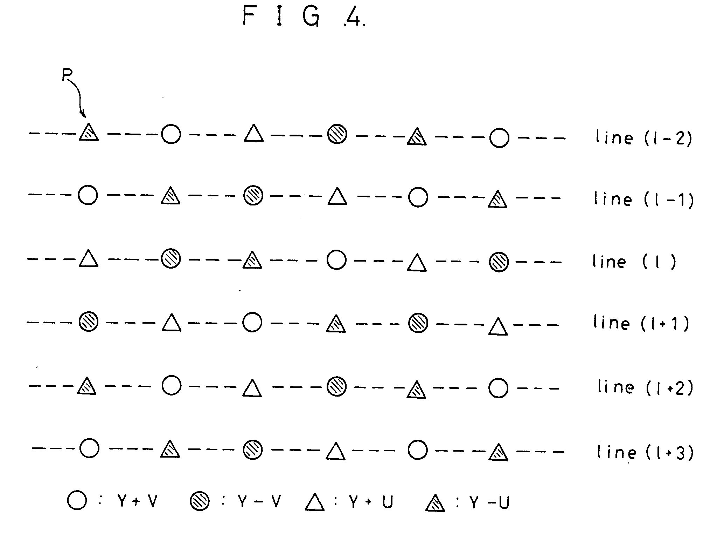

The sampling pulse generator 3 is an oscillator which synchronously oscillates at a frequency fs which is a frequency of four times the color sub-carrier wave frequency fsc for composite television signals which are applied to the input terminal 1. It is arranged so that the phase of the sampling pulse therefrom is in accordance with the axes (U and V axis) of the color difference signals (R-Y) and (B-Y). The sampling pulses output from the circuit 3 are applied to the A/D converter 2, in response to which the A/D converter converts the analog composite signals into digital ones. The composite color television signals of PAL system which have been sampled by the sampling pulses appear as shown in Figure 4 when the phase of C signal is noted.

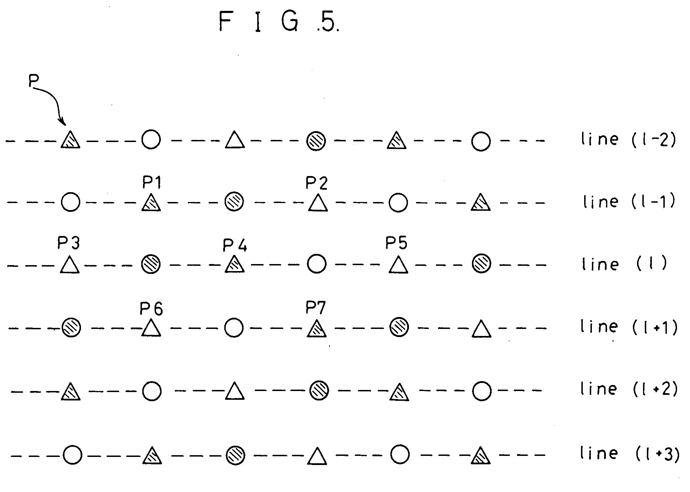

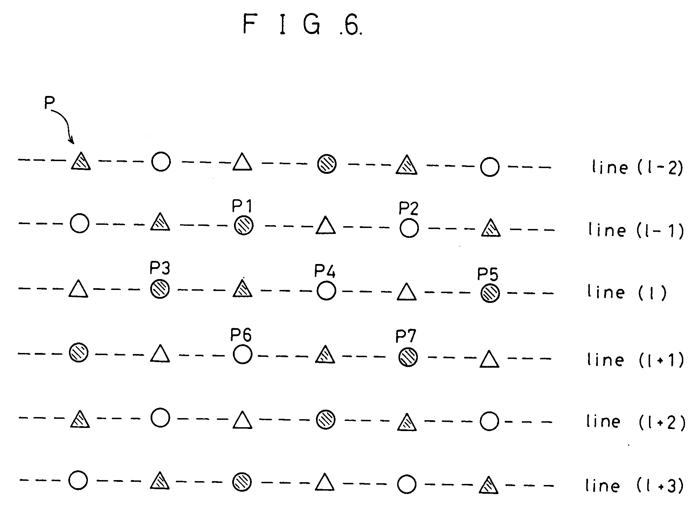

Referring to Figure 5 and 6, the embodiment will be described in greater detail:

The illustrations in Figures 5 and 6 are basically the same as that in Figure 4, except for the addition of reference signs and numerals. The case shown in Figure 5 is described in the following with the use of the circuit of Figure 3.

Suppose that the A/D converter 2 outputs a signal at P7 (the 6th sample signal) at a time T. Then the 3rd delay circuit 21a outputs a signal at P6 (the 5th sample signal); the 4th delay circuit 21b outputs a signal at P1 (the 1st sample signal); the 1st delay circuit 43 outputs a signal at P5 (the 4th sample signal); the 2nd delay circuit 44 outputs a signal at P2 (the 2nd sample signal); the 5th delay circuit 21c outputs a signal at P4 (the signal to be separated); and the 6th delay circuit 21d outputs a signal at P3 (the 3rd smaple signal). In this case, the point where the Y and C separation is to be carried out, that is, the signal to be separated is the P4.

Referring to Figure 5, the switching signal generator 26 sends a control signal to the 2nd switching circuit 24a, in such a manner as to allow the output signal from the 3rd delay circuit 21a to pass, and sends a control signal to the 1st switching circuit 24b to allow the output signal from the 2nd delay circuit 44 to pass.

In this way the output signal of the 2nd switching circuit 24a becomes a sample value of the point P6, and likewise that of the 1st switching circuit 24b becomes a sample value of the point P2.

The 1st addition circuit 22a adds the output of the 2nd switching circuit 24a and that of the 1st switching circuit 24b, and the 1st multiplication circuit 63 multiplies the output of the addition circuit 22a 1/4 times. The 3rd multiplication circuit 51 multiplies the output of the 5th delay circuit 21c 1/2 times. The 3rd reduction circuit 93 reduces the output of the 1st multiplication circuit 63 from that of the 3rd multiplication circuit 51, and outputs a signal Hc which is expressed by:

- 1 / 4 (the sample value at the point P6)
+ 1 / 2 (the sample value at the point P4)
- 1 / 4 (the sample value at the point P2).

The 2nd addition circuit 22b adds the output of the 1st delay circuit 43 and that of the 6th delay circuit 21d, and the 2nd multiplication circuit 64 multiplies the output of the addition circuit 22b 1/4 times. The 5th reduction circuit 95 reduces the output of the 2nd multiplication circuit 64 from the output of the 3rd multiplication circuit 51. In this way the output signal of the circuit 95, that is, Vc signal is expressed by:

- 1 / 4 (the sample value at the point P3)
+ 1 / 2 (the sample value at the point P4)
- 1 / 4 (the sample value at the point P5).

The outputs of the 2nd switching circuit 24a and the 1st switching circit 24b are applied to the 2nd reduction circuit 92, the output of which is taken an absolute value by the 1st absolute-value circuit 23a. Accordingly, the output signal Tv of the 1st absolute-value circuit 23a is:

Tv = |(the sample value at the point P6) - (the sample value at the point P2)|

The outputs of the 1st delay circuit 43 and the 6th delay circuit 21d are applied to the 4th reduction circuit 94, the output of which is taken an absolute value by the absolute-value circuit 23b. The output signal of the 2nd absolute-value circuit 23b (TH) is expressed by:

TH = |(the sample value at the point P5) - (the sample value at the point P3)|

The output signal Tv of the 1st absolute-value circuit 23a and the output signal TH of the 2nd absolute-value circuit 23b are added to the comparator 25, which compares them thereby to send a control signal from the 3rd reduction circuit 93 and from the 5th reduction circuit 95. When Tv is smaller than the TH, the selecting circuit 24c outputs the 1st state signal so as to ensure that the output thereof becomes an output of the 3rd reduction circuit 93, whereas, when Tv is equal to or larger than TH, the selecting circuit 24c outputs the 2nd state signal so as to ensure that the output thereof becomes an output of the 5th reduction circuit 95.

Under the illustrated system the adjacent picture element signals whose phases of color sub-carrier waves are reversed relative to that of the signal to be separated (the reversed sampling points) are used to detect a direction in which the signals have less variation, and the picture element signal in the detected direction is used to separate the C signals from the composite television signals. This system ensures an exact, clear separation.

At next, the case in Figure 6 is described in the following with the use of the circuit of Figure 3.

Suppose that the A/D converter 2 outputs a signal at P7 (the 6th sample signal) at a time T. The 3rd delay circuit 21a outputs a signal at P6 (the 5th sample signal); the 4th delay circuit 21b outputs a signal at P1 (the 1st sample signal); the 1st delay circuit 43 outputs a signal at P5 (the 4th sample signal); the 2nd delay circuit 44 outputs a signal at P2 (the 2nd sample signal); the 5th delay circuit 21c outputs a signal at P4 (the signal to be separated); and the 6th delay circuit 21d outputs a signal at P3 (the 3rd sample signal).

In the embodiment shown in Figure 6 the switching signal generator 26 sends a control signal to the 2nd switching circuit 24a in such a manner as to allow the output signal of the A/D converter 2 to pass, and sends a control signal to the 1st switching circuit 24b in such a manner as to allow the output signal of the 4th delay circuit 21b to pass.

In this way the output of the 2nd switching circuit 24a becomes a sample value at the point P7, and that of the 1st switching circuit 24 becomes a sample value at the point P1.

The 1st addition circuit 22a adds the outputs of the 2nd switching circuit 24a and of the 1st switching circuit 24b, and the 1st multiplication circuit 63 multiplies the output of the circuit 22a 1/4 times. The 3rd multiplication circuit 51 multiplies the output of the 5th delay circuit 21c 1/2 times. The 3rd reduction circuit 93 reduces the output of the 1st multiplication circuit 63 from that of the 3rd multiplication circuit 51. In this way the output signal of this reduction circuit 93 (Hc) is expressed by:

- 1 / 4 (the sample value at the point P7)
+ 1 / 2 (the sample value at the point P4)
- 1 / 4 (the sample value at the point P1)

The 2nd addition circuit 22b adds the outputs of the 1st delay circuit 43 and of the 6th delay circuit 21d, and the 2nd multiplication circuit 64 multiplies the output of this cirucit 22b 1/4 times. The 5th reduction circuit 95 reduces the output of the 2nd multiplication circuit 64 from that of the 3rd multiplication circuit 51. In this way the output signal of the reduction circuit 95 (Vc) is expressed by:

- 1 / 4 (the sample value at the point P3)
+ 1 / 2 (the sample value at the point P4)
- 1 / 4 (the sample value at the point P5)

The outputs of the 1st switching circuit 24a and the 2nd switching circuit 24b are applied to the 2nd reduction circuit 92, the output of which is taken an absolute value by the 1st absolute-value circuit 23a. Consequently, the output of the 1st absolute-value circuit 23a, that is, the signal TV, is expressed by:

Tv = |(the sample value at the point P7) - (the sample value at the point P1)|

The outputs of the 1st delay circuit 43 and of the 6th delay circuit 21d are applied to the 4th reduction circuit 94, the output of which is taken an absolute value by the 2nd absolute-value circuit 23b. Consequently, the output of the 2nd absolute-value circuit 23b, that is, the signal TH, is expressed by:

TH = |(the sample value at the point P5) - (the sample value at the point P3)|

The output Tv of the 1st absolute-value circuit 23a and the output TH of the 2nd absolute-value circuit 23b are applied to the comparator 25, which compares these outputs Tv and TH thereby to send a control signal of the 1st or 2nd state signal to the selecting circuit 24c. The selecting circuit 24c has already received the outputs of the 3rd reduction circuit 93 and the 5th reduction circit 95. When Tv is smaller than TH, the comparator 25 outputs the 1st state signal so that the output of the selecting circuit 24c becomes that of the 3rd reduction circuit 93. When Tv is equal to, or larger than TH, the comparator 25 outputs the 2nd state signal to the selecting circuit 24c so that the output of the selecting circuit 24c becomes that of the 5th reduction cirucit 95.

Under the illustrated system the adjacent picture element signals whose color sub-carrier wave phases are reversed relative to that of the signal to be separated are used to detect a direction in which the signals have less variation, and the picture elements in the detected direction are used to separate the C signals from the composite television signals. Thus the system ensures an exact, clear separation.

The operation of the switching signal generator 26 will be described:

As evident from Figure 3, let us note some particular point, for example, the point P4. Sampling points whose color sub-carrier wave phases are reversed relative to that of the signal to be separated at point P4 are found two points forward or backward on the same line, and on the upper and lower lines there are two cases, that is:

(1) one sampling point backward of the sampling point one line up, and one sampling point forward of the sampling point one line below; and

(2) one sampling point forward of the sampling point one line up, and one sampling point backward of the sampling point one line below.

7

EP 0 161 923 B1

The cases (1) and (2) have been described with reference to Figures 5 and 6, respectively. To embody a Y- and C-signals separating filter, it is required to ascertain which case of the Figures 5 and 6 the arrangement of the adjacent sampling points belong to, and send a control signal to the 2nd or 1st switching circuit 24a or 24b, respectively. For example, in Figures 5 and 6 the absolute value of the difference signal between the sample value at the point P4 (the signal to be separated) and that at the point P1, and the absolute value of the difference between the sample value at the point P4 and that at the point P2 are compared.

|(the sample value at the point P4) - (the sample value at the point P1)|
<|(the sample value at the point P4) - (the sample value at the point P2)|

When this relationship is established, the switching signal generator 26 outputs a control signal in such a manner as to allow the 2nd switching circuit 24a to pass the output signal of the 3rd delay circuit 21a, and to allow the 1st switcing circuit 24b to pass the output signal of the 2nd delay circuit 44.

When the relationship is opposite, the switching signal generator 26 outputs a control signal in such a manner as to allow the 2nd switching circuit 24a to pass the output signal of the A/D converter 2, and to allow the 1st switching circuit 24b to pass the output signal of the 4th delay circuit 21b.

For example, when the phase of the sampling signal is fixed, the two-dimensional arrangement shown in Figure 4 is fixed. Accordingly, the generator 26 can be constructed so that the 2nd and 1st switching circuits 24a, 24b are switched at every sampling point on each line through the recognition of horizontal lines of the input signals at the terminal 1.

The 1st reduction circuit 91 reduces the output of the switching circuit 24c from that of the 5th delay circuit 21c, the latter output being a composite television signal, and the output signal of the selecting cirucit 24c being a C-signal separated from the composite television signal. As a result, the output of the 1st reduction circuit 91 becomes a Y-signal.

Under the above-mentioned system the sample values at points one line up and below or alternatively the smaple values at points two points forward and backward on the same line with relative to a specific sampling point are used to effect the separation of Y and C signals. Since the used sample values have little variation, the exact and clear separation is secured as compared with the conventional separating system. In addition, the values of the adjacent sampling points are used to detect a direction in which the signals have less variation, and the output of the filter in the detected direction is used to separate the Y-signal. As a result, the exact, clear separaation is secured even when the video images are subjected to violent changes. This leads to the production of images free from cross-color or cross-luminance distortion.

Furthermore, the A/D conversion is performed with the sampling pulses having a frequency of four times that of color sub-carrier waves, and a phase in accordance with the axis of the color difference signal, thereby ensuring that reversed sampling points whose color sub-carrier wave phases are reversed to that of a specific sampling point are obtained one line up and below. This means that under this system no two-line memory is required but a single-line memory will suffice, thereby decreasing the production cost.

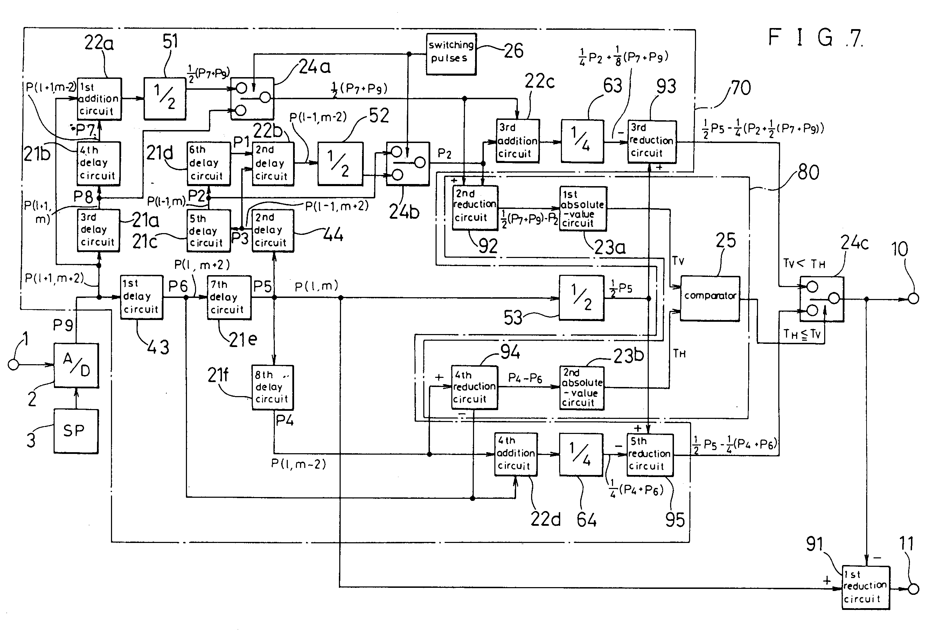

Referring to Figure 7, a modified version of the embodiment will be described:

There are provided an input terminal 1 for receiving analog composite television signals (composite video signals), a sampling signal generator 3 including a sampling pulse generating circuit (SP) which generates pulses which have a frequency of four times that of color sub-carrier wave, and whose phases are $45°$ advanced or delayed with relative to the color signals; and A/D converter 2 which receives the composite television signals P, and converts them into digital signals with using sampling pulses from the sampling signal generator 1; a first delay circuit 43 which delays the input signal by one horizontal scanning period; a second delay circuit 44 which delays the input signal a shorter peiod of time by two sampling periods than one horizontal scanning period; and a third, fourth, fifth, sixth, seventh, and eighth delay circuit 21a, 21b, 21c, 21d, 21e, and 21f each of which delays the input signal by two sampling periods. The 1st to 8th delay circuits constitute a sample signal generator which generates 1st to 8th sample signals as well as the signal to be separated on the basis of the digital signals from the A/D converter 2. The signal to be separated $P(\ell, m)$ is output from the 7th delay circuit 21e. The 1st sample signal $P(\ell-1, m-2)$ is output from the 6th delay circuit 21d, and is a signal delayed a longer period of time by two sampling periods than one horizontal scanning period as compared with the signal to be separated. The 2nd sample signal $P(\ell-1, m)$ is output from the 5th delay circuit 21c, and is a signal delayed one horizontal scanning period as compared with the signal to be separated. The 3rd sample signal $P(\ell-1, m+2)$ is output from the 2nd delay circuit 44, and is a signal delayed a shorter period of time by two sampling periods than one horizontal scanning period as compared with the signal to be separated. The 4th sample signal $P(\ell, m-2)$ is output from the 8th delay circuit 21f, and is a signal delayed two sampling periods as compared with the signal to be separated.

8

The 5th sample signal $P(\ell, m+2)$ is output from the 1st delay circuit 43, and is a signal advanced two sampling periods as compared with the signal to be separated. The 6th sample signal $P(\ell+1, m-2)$ is output from the 4th delay circuit 21b, and is a signal advanced a shorter period of time by two sampling periods than one horizontal scanning period as compared with the signal to be separated. The 7th sample signal $P(\ell+1, m)$ is output from the 3rd delay circuit 21a, and is a signal advanced one horizontal scanning period as compared with the signal to be separated. The 8th sample signal $P(\ell+1, m+2)$ is output from the A/D converter 2, and is a signal advanced a longer period of time by two sampling periods than one horizontal scanning period as compared with the signal to be separated. There are provided a first addition circuit 22a which adds the 8th sample signal from the A/D converter 2, and the 7th sample signal from the 4th delay circuit 21b; a fourth multiplication circuit 51 which multiplies the signal from the 1st addition circuit 51 1/2 times; a second addition circuit 22b which outputs the sum of the 1st sample signal from the 6th delay circuit 21d and the 3rd smaple signal from the 2nd delay circuit 44; a fifth multiplication circuit 52 which multiplies the signal from the 2nd addition circuit 22b 1/2 times; a second switching circuit 24a which receives the 1/2 sum signal from the 4th multiplication circuit 51 and the 7th sample signal from the 3rd delay circuit 21a, and selectively outputs either of these signals in accordance with a first and second state signal from a switching signal generator 26, that is, upon reception of the 1st state signal the 1/2 sum signal from the 4th multiplication circuit 51 is output, and upon reception of the 2nd state signal the 7th sample signal is output. The reference numeral 24b designates a first switching circuit which receives the 2nd sample signal from the 5th delay circuit 21c and the 1/2 sum signal from the 5th multiplication circuit 51, and selectively outputs either of these signals in accordance with the 1st and 2nd state signal from a switching signal generator 26, that is, upon reception of the 1st state signal the 2nd sample signal is output, and upon reception of the 2nd state signal the 1/2 sum signal is output. There is provided a second reduction circuit 92 which outputs a difference signal between the selected output from the 1st switching circuit 24b, and that from the 2nd switching circuit 24a. The reference numeral 23a designates a first absolute-value circuit which outputs Tv signal which is an absolute value of the difference signal from the 2nd reduction circuit 92. This absolute-value circuit 23a constitutes a Tv signal generator in combination with the 2nd reduction circuit 92. The reference numeral 94 designates a 4th reduction circuit which outputs a difference signal between the 5th sample signal from the 1st delay circuit 43 and the 4th sample signal from the 8th delay circuit 21e. The reference numeral 23b designates a second absolute-value circuit which outputs the TH signal which is an absolute value of the difference signal from the 4th reduction circuit 94. This circuit 23b constitutes a TH signal generator in combination with the 4th reduction circit 94. The reference numeral 25 designates a comparator which compares the Tv and TH signals from the 1st absolute-value circuit 23a, and the 2nd absolute-value circuit 23b, respectively, and outputs the 1st state signal when Tv is smaller than TH, and the 2nd state signal when TH is smaller than Tv. The Tv signal generator, the TH signal generator, and the comparator 25 constitute a detecting circuit 80 in combination, for detecting a direction in which the composite television signals have less variation. The reference numeral 22c designates a third addition circuit which outputs the sum of the selected output from the 1st switching circuit 24b, and that from the 2nd switching circuit 24a. The reference numeral 63 designates a first multiplication circuit which multiplies the output from the 3rd addition circuit 22c 1/4 times. The reference numeral 53 designates a third multiplication circuit which multiplies the signal to be separated which is sent from the 7th delay circuit 21e 1/2 times. The reference numeral 93 designates a third reduction circuit which outputs a difference signal between the output from the 3rd multiplication circuit 51 and that from the 1st multiplication circuit 63 as Hc signal, which is a chrominance signal in a horizontal direction. The 3rd addition circuit 22c, the 1st multiplication circuit 63, and the 3rd multiplication circuit 53 constitute a Hc signal generating circuit in combination. The reference numeral 22d designates a fourth addition circuit which outputs the sum of the 5th sample signal from the 1st delay circuit 43 and the 4th sample signal from the 8th delay circuit 21f. The reference numeral 64 designates a second multiplication circuit which multiplies the output from the 4th addition cirucit 22d 1/4 times. The reference numeral 95 designates a fifth reduction circuit wich outputs a difference signal between the output signal from the 3rd multiplication circuit 51 and that from the 2nd multiplication circuit 64 as Vc signal, which is a chrominance signal in a vertical direction. The 4th addition circuit 22d and the 2nd multiplication circuit 64 constitute the Vc signal generating circuit. The sample signal generating circuit, the Hc signal generating circuit, and the Vc signal generating circuit constitute a vertical filter and a horizontal filter 70. The reference numeral 24c designates a selecting circuit which, receiving the Hc signal from the 3rd reduction circuit 93 as well as the Hv signal from the 5th reduction circuit 95, and also receiving the 1st and 2nd state signals from the comparator 25, selectively outputs the Hc signal to the chrominance signal output terminal 10 as a chrominance signal upon reception of the 1st state signal, and selectively outputs the Vc signal to the same terminal 10 as a chrominance signal upon reception of the 2nd state signal. The reference numeral 91

9

designates a first reduction circuit which outputs a difference signal between the signal to be separated from the 5th delay circuit 21, and the chrominance signal of the selected output from the selecting circuit 24c to a luminance signal terminal 11 as a luminance signal.

The circuit shown in Figure 7 is operated as follows:

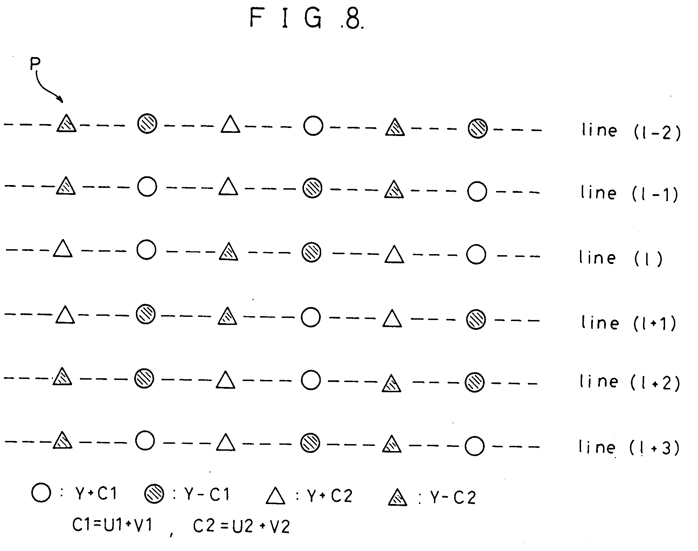

The sampling signal generating circuit 3 is an oscillating circuit which synchronously oscillates at a frequency fs which is four times the frequency fsc of the color sub-carrier wave of the composite television signal which is applied to the input terminal 1, the sampling pulse having a phase which is 45° advanced or delayed with relative to the axis of the color difference signals (R-Y) and (B-Y). The sampling signal output from the circuit 3 is applied to the A/D converter 2, which then converts the analog composite signals received at the input terminal 1 into digital signals. In this way the composite color T.V. signals of PAL system are converted into sample signal series, which will appear on the screen as shown in Figure 8 when the phase of C-signals is noted.

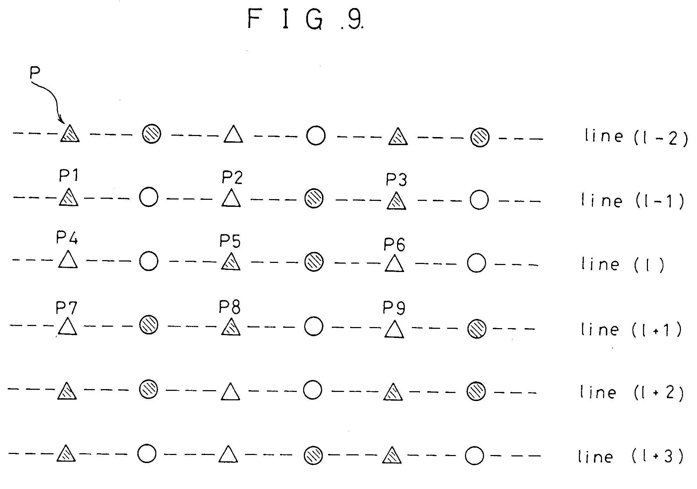

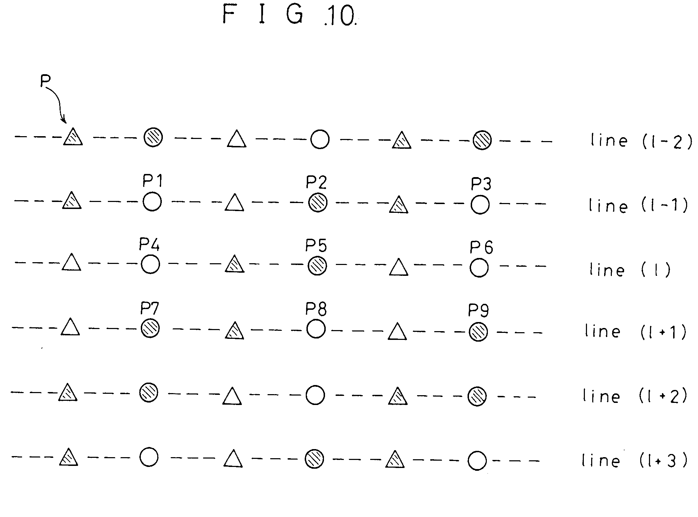

Referring to Figures 9 and 10, the embodiment shown in Figure 7 will be described in greater detail, wherein the picture in Figure 9 has the addition of reference numerals and characters to that in Figure 8. The situatin in Figure 9 will be described by using the circuit in Figure 7:

Now, suppose that the A/D converter 2 outputs a sample value at the point P9 as the 8th sample signal at a time T. Then the 3rd delay circuit 21a outputs a sample value at the point P8 as the 7th sample signal; the 4th delay circuit 21b outputs a sample value at the point P7 as the 6th sample signal; the 1st delay circuit 43 outputs a sample value at the point P6 as the 4th sample signal; the 7th delay circuit 21e outputs a sample value at the point P5 as a signal to be separated; the 8th delay circuit 21f outputs a sample value at the point P4 as the 4th sample signal; the 2nd delay circuit 44 outputs a sample value at the point P3 as the 3rd sample signal; the 5th delay circuit 21c outputs a sample value at the point P2 as the 2nd sample signal, and the 6th delay circuit 21d outputs a sample value at the point P1 as the 1st sample signal. In this case the point 5 is the point of the signal which is to be separated into Y and C signals.

In the case of Figure 9 the switching signal generating circuit 26 outputs a control signal of the 1st state signal to the 2nd switching circuit 24a in such a manner as to allow the output signal of the 1st 1/2 times circuit 51 to pass, and also outputs a control signal of the 1st state signal to the 1st switching circuit 24b in such a manner as to allow the output signal of the 5th delay circuit 21c to pass.

The 1st addition circuit 22a adds the output of the A/D converter 2 and that of the 4th delay circuit 21b, and the 4th multiplication circuit 51 multiplies the output of the 1st addition circuit 22a 1/2 times. As a result, the output of the 1st addition circuit 22a, that is, the output of the 2nd switching circuit 24a is expressed by:

1 / 2 ([the sample value at the point P9] + [the sample value at the point P7])

The output of the 1st switching circuit 24b provides a sample value at the point P2.

The 3rd addition circuit 22c adds the output of the 2nd switching circuit 24a and that of the 1st switching circuit 24b, and the 1st multiplication circuit 63 multiplies the output of the addition circuit 22c 1/4 times. The 3rd multiplication circuit 53 multiplies the output of the 7th delay circuit 21e 1/2 times. The 3rd reduction circuit 93 reduces the output of the 1st multiplication circuit 63 from the output of the 3rd multiplication circuit 53. Consequently, the output signal Hc of the 1st reduction circuit 93 is expressed by:

- 1 / 4 (1/2 [the sample value at the point P9]) + [the sample value at the point P7])
+ 1 / 2 (the sample value at the point P5)
- 1 / 4 (the sample value at the point P2)

The 4th addition circuit 22d adds the output of the 1st delay circuit 43 and that of the 8th delay circuit 21f, and the 2nd multiplication circuit 64 multiplies the output of the addition circuit 22d 1/4 times. The 5th reduction circuit 95 reduces the output of the 2nd multiplication circuit 64 from that of the 3rd multiplication circuit 53, the output signal of the reduction circuit 95 Vc is expressed by:

- 1 / 4 (the sample value at the point P4)
+ 1 / 2 (the sample value at the point P5)
- 1 / 4 (the sample value at the point P6)

The output signals of the 2nd switching circuit 24a, and the 1st switching circuit 24b are applied to the 2nd reduction circuit 92, the output of which is taken an absolute value by the 1st absolute-value circuit 23a. The output signal Tv of the 1st absolute-value circuit 23a is expressed by:

Tv = | 1 / 2 ([the sample value at the point P9]
+ [the sample value at the point P7])
- (the sample value at the point P2)|

The outputs of the 1st delay circuit 43 and the 8th delay circuit 21f are applied to the 4th reduction circuit 94, the output of which is taken an absolute value by the 2nd absolute-value circuit 23b. The output signal TH of the 2nd absolute-value circuit 23b is expressed by:

TH = |(the sample value at the point P4) - (the sample value at the point P6)|

The output signal Tv of the 1st absolute-value circuit 23a, and the output signal TH of the 2nd absolute-value circuit 23b are applied to the comparator 25, which compares the Tv and TH, and sends the 1st or 2nd state signal as a control signal to the selecting circuit 24c. At this stage the selecting circuit 24c has received the output signals of the 3rd reduction circuit 93 and the 5th reduction circuit 95. When Tv is smaller than TH, the comparator 25 outputs the 1st state signal to the switching circuit 25c so that the output thereof be that of the 3rd reduction circuit 93. When Tv is equal to, or larger than TH, the comparator 25 outputs the 2nd state signal to the switching circuit 24c so that the output thereof be the output of the 5th reduction circuit 95.

Under the illustrated system the adjacent picture element signals whose color sub-carrier wave phases are reversed with relative to the particular picture element are used to detect a direction in which the signals have little variation, and the picture elements in the detected direction are used to separate the C signals from the composite television signals. Thus the system ensures the exact, clear separation.

The example of Figure 10 will be described with reference to Figure 7:

Now suppose that the A/D converter 2 outputs a sample value at the point P9 (the 8th sample signal) at a time T. Then the 3rd delay circuit 21a outputs a sample value at the point P8 as the 7th sample signal; the 4th delay circuit 21b outputs a sample value at the point P7 as the 6th sample signal; the 1st delay circuit 43 outputs a sample value at the point P6 as the 5th sample signal; the 7th delay circuit 21c outputs a sample value at the point P5 as the signal to be separated; the 8th delay circuit 21f outputs a sample value at the point P4 as the 4th sample signal; the 2nd delay circuit 44 outputs a sample value at the point P3 as the 3rd sample signal; the 5th delay circuit 21e outputs a sample value at the point P2 as the 2nd sample signal; and the 6th delay circuit 21d outputs a sample value at the point P1 as the 1st sample signal.

In the case of Figure 10 the switching signal generating circuit 26 outputs a control signal to the 2nd switching circuit 24a so as to allow the output signal of the 3rd delay circuit 21a to pass, and outputs a control signal to the 1st switching circuit 24b so as to allow the output signal of the 5th multiplication circuit 52 to pass.

The 2nd addition circuit 22b adds the output of the 2nd delay circuit 44 and that of the 6th delay circuit 21d, and the 5th multiplication circuit 52 multiplies the output of the 2nd addition circuit 22b 1/2 times. Therefore, the output of the 2nd addition circuit 22b, that is, the output signal of the 1st switching circuit 24b is expressed by:

1 / 2 (the sample value at the point P3) + (the sample value at the point P1)

The output signal of the 2nd switching circuit 24a becomes the sample value at the point P8.

The 3rd addition circuit 22c adds the output of the 2nd switching circuit 24a and the 1st switching circuit 24b, and the 1st multiplication circuit 63 multiplies the output of the addition circuit 22c 1/4 times. The 3rd multiplication circuit 53 multiplies the output of the 7th delay circuit 21e 1/2 times. The 3rd reduction circuit 93 reduces the output of the 1st multiplication circuit 63 from the output of the 3rd multiplication cirucit 53. Thus the output signal Hc of the reduction circuit 93 is expressed by:

- 1 / 4 (1/2 [the sample value at the point P3] + [the sample value at the point P1])
+ 1 / 2 (the sample value at the point P5)
- 1 / 4 (the sample value at the point P8)

The 1st addition circuit 22d adds the output of the 1st delay circuit 43 and that of the 8th delay circuit 21f, and the 2nd multiplication circuit 64 multiplies the output of the addition circuit 22d 1/4 times. The 5th reduction circuit 95 reduces the output of the 2nd multiplication circuit 64 from the output of the 3rd multiplication circuit 53. The output signal Vc of the reduction circuit 95 is expressed by:

- 1 / 4 (the sample value at the point P4)
+ 1 / 2 (the sample value at the point P5)
- 1 / 4 (the sample value at the point P6)

The outputs of the 2nd switching circuit 24a and the 1st switching circuit 24b are applied to the 2nd reduction circuit 92, the output of which is taken an absolute value by the 1st absolute-value circuit 23a. As a result the output signal Tv of the 1st absolute-value circuit 23a is expressed by:

Tv = | 1 / 2 (the sample value at the point P3) + (the sample value at the point P1)
- (the sample value at the point P8)|

The outputs of the 1st delay circuit 43 and the 8th delay circuit 21f are applied to the 4th reduction circuit 94, the output of which is taken an absolute value by the 2nd absolute-value circuit 23b. As a result the output signal TH of the 2nd absolute-value circuit 23b is expressed by:

TH = |(the sample value at the point P4) - (the sample value at the point P6)|

The output signal Tv of the 1st absolute-value circuit 23a and the output signal TH of the 2nd absolute-value circuit 23b are applied to the comparator 25, which compares these signals Tv and TH thereby to send the 1st or 2nd state signal as a control signal to the switching cirucit 24c. The switching circuit 24c has already received the output signals of the 3rd reduction circuit 93 and the 5th reduction circuit 95. As a result, when Tv is smaller than TH, the comparator 25 outputs the 2nd state signal as a control signal to the switching circuit 24c so that the output thereof be the output of the 3rd reduction circuit 93. When Tv is equal to, or larger than TH, the comparator 25 outputs the 2nd state signal as a control signal to the switching circuit 24c so that the output thereof be the output of the 5th reduction circuit 95.

Under the illustrated system the adjacent picture element signals whose color sub-carrier wave phases are reversed with relative to that of the particular picture element are used to detect a direction in which the signals have less variation, and the picture elements in the detected direction are used to separate the C signals from the composite television signals. Thus the system ensures an exact, clear separation of C and Y signals.

The operation of the switching signal generating circuit 26 will be described:

As evident from Figure 7, when a particular sampling point is noted, there are two cases in which sampling points whose color sub-carrier wave phases are reversed to that of the particular sampling point are found one line up and below. Figure 9 illustrates the case in which the sampling points whose color sub-carrier wave phases are reversed to that of the noted point P5 are found one line up. Figure 10 illustrates the other case, that is, they are found one line below. To embody a Y- and C-signal separating filter, it is required for the switching pulse generating cirucit 26 to generate control pulses whereby the 2nd switching circuit 24a and the 1st switching circuit 25b are switched depednding on the respective cases of Figures 9 and 10, at each of the noted sampling point. Now, suppose that the point P5 is a point where the intended separation is to be performed. The sampling values at this point P5 and a corresponding point P2 one line up are compared, and an absolute value of the resulting difference is taken. In addition, the sampling values at the point P5 and a corresponding point P8 one line below are compared, and an absolute value of the resulting difference is taken. These absolute values are compared:

|(the sample value at the point P5) - (the sample value at the point P2)|
>|(the sample value at the point P5) - (the sample point at the point P8)|

If the above relationship is established, the switching signal generating circuit 26 outputs a control signal in such a manner as to allow the 2nd switching circuit 24a to pass the output signal of the 4th multiplication circuit 51, and to allow the 1st switching circuit 24b to pass the output signal of the 5th delay circuit 21c.

In the opposite case (Figure 10) the switching signal generating circuit 26 outputs a control signal so as to allow the 2nd switching circuit 24a to pass the output signal of the 3rd delay circuit 21a, and to allow the 1st switching circuit 24b to pass the output signal of the 5th multiplication circuit 52.

When the phase of the sampling signal is fixed, the patterns shown in Figure 8 are equally fixed. Therefore, it is possible to construct the switching signal generating circuit 26 so that the 2nd and 1st switching circuits 24a, 24b can be switched at each sampling point on one line through the recognition of the horizontal line of the input signal.

The 1st reduction circuit (luminance signal output circuit) 91 reduces the output of the selecting circuit 24c from that of the 7th delay circuit 21e. The output signal of the 7th delay circuit 21e is a composite television signal, and the output signal of the selecting circuit 24c is a C signal which has been separated from the composite television signal. As a result, the output signal of the 1st multiplication circuit 91 becomes a Y signal.

As evident from the foregoing description, the sampling points one line up and below or the sampling points two points forward and backward on the same line are used to perform the separation of Y- and C-signals. An advantage of this system is that each sampling point has little variation, which results in the exact separation of Y- and C-signals. Furthermore, the adjacent samling points are used to detect a direction in which the signals have less variation, and the output of the filter in the detected direction is used to separate the Y signals. This method ensures the exact and clear separtion regardless of the situation in which video images are subjected to violent changes, and that the images free from cross-color or cross-luminance distortion is reproduced.

In the embodiment illustrated in Figure 7, the A/D conversion is performed with the use of a sampling pulse having a frequency of four times that of the color sub-carrier wave, and whose phase is 45 advanced or delayed with relative to the color difference signal. This makes it possible to obtain a reversed sampling point whose color sub-carrier wave phase is reversed with relative to that of the desired sampling point one line up and below thereof, thereby eliminating the necessity of using a two-line memory. The use of a single-line memory leads to the decreased production cost.

**Claims**

1. A filter (Fig.3,Fig.7) for separating the luminance (Y) and chrominance (C) components of a composite television/video signal, which filter comprises:

   signal sampling means (2,3) for sampling the signal at a frequency of four times that of the colour sub-carrier to produce a multiplicity of composite signal samples (P);

   vertical and horizontal filter means (70), arranged to receive said samples (P) for producing by operations thereon both a vertical filter estimate ($V_c$) and a horizontal filter estimate ($H_c$) of the chrominance component of each respective sample ($P_4$;$P_5$);

   decision means (80) for deciding which respective one of said vertical filter and horizontal filter estimates is to be selected as the chrominance component (C) of each respective sample ($P_4$; $P_5$);

   selection means (24c) for selecting one or other of said vertical filter and horizontal filter estimates ($V_c$;$H_c$), in dependance upon the decision of said decision means (80), for each respective sample ($P_4$;$P_5$), and

   luminance component separation means (91) for separating the luminance component (Y) of each respective sample ($P_4$; $P_5$);

   which filter is <u>characterised in that</u> :

   said decision means (80) is operable upon a selection of said samples (P) to detect that direction either vertical or horizontal, in which the variation of the signal, in the immediate local vicinity of each respective sample ($P_4$;$P_5$), is less, and is operable accordingly to cause said selection means (24c) to select the corresponding respective vertical filter estimate ($V_c$) or horizontal filter estimate ($H_c$) as the chrominance component (C) of each respective sample ($P_4$;$P_5$).

2. A filter as claimed in claim 1 wherein said decision means (80) is arranged to receive and is operable directly upon a selection ($P_1$-$P_7$) of said samples (fig.5;fig.6) which selection is comprised of those two samples ($P_3$,$P_5$) which are both next adjacent to, and on the same line (l) as, each respective sample ($P_4$) together with selected samples ($P_2$ & $P_6$; $P_1$ & $P_7$) are either immediately adjacent to, or next adjacent to, and which also are on the line (l-1) immediately preceding and the line (l + 1) immediately following, each respective sample ($P_4$).

3. A filter as claimed in either of the preceding claims wherein said vertical and horizontal filter means (70) is operable directly upon each respective sample ($P_4$) and upon a selection ($P_1$-$P_7$) of said samples (fig.5;fig.6) which selection is comprised of those two samples ($P_3$,$P_5$) which are both next adjacent to, and on the same line (l) as, each respective sample ($P_4$), together with selected samples ($P_2$,$P_6$; $P_1$,$P_7$) which are either immediately adjacent to, or next adjacent to, and which also are on the line (l-1) immediately preceding and the line (l + 1) immediately following, each respective sample ($P_4$), and

13

wherein the chrominance components (C) of the samples ($P_2,P_3,P_5,P_6$; $P_1,P_3,P_5,P_7$) of said selection ($P_1$-$P_7$) are all opposite in phase to the phase of the chrominance component (C) of each said respective sample ($P_4$).

4. A filter as claimed in claims 2 and 3 wherein said decision means selection (fig.5;fig.6) of said samples and said vertical and horizontal filter means selection of said samples are the same ($P_2,P_3,P_5,P_6$; $P_1,P_3,P_5,P_7$).

5. A filter (fig.3) as claimed in claim 4 wherein:
said signal sampling means (2,3) is adapted for sampling a phase alternating line PAL encoded composite television/video signal to produce composite signal samples in coincidence with the U & V scaled colour difference signal axes of the colour subcarrier; and
said selected samples ($P_2,P_6$; $P_1,P_7$), which are on the line (l-1) immediately preceding and on the line (l+1) immediately following each respective sample ($P_4$), are diagonally immediately adjacent to each respective sample ($P_4$).

6. A filter as claimed in claim 5 wherein said decision means (80) is operable to detect said direction, either vertical or horizontal, by comparing:
the absolute value of the difference between the two samples ($P_3,P_5$) which are next adjacent to, and on the same line (l) as, each respective sample ($P_4$); and
the absolute value of the difference between those two samples ($P_2,P_6$; $P_1,P_7$) which are diagonally immediately adjacent to, and which respectively are on the line (l-1) immediately preceding and on the line (l+1) immediately following, each respective sample.

7. A filter (fig.7) as claimed in claim 4 wherein:
said signal sampling means (2,3) is adapted for sampling a phase alternating line PAL encoded composite television/video signal to produce composite signal samples (fig.9; fig.10) in coincidence with axes offset ±45° with respect to the U & V scaled colour difference signal axes of the colour subcarrier; and
said selected samples ($P_2,P_7,P_9$; $P_1,P_3,P_8$) comprise one sample ($P_2$;$P_8$) which is vertically immediately adjacent to each respective sample ($P_5$) and two samples ($P_7,P_9$; $P_1,P_3$) which are next adjacent to each respective sample ($P_5$) which one and two samples respectively are on the line (l-1) immediately preceding and on the line (l+1) immediately following each respective sample ($P_5$), or, on the line (l+1) immediately following and on the line (l-1) immediately preceding each respective sample ($P_5$) alternately for consecutive respective samples (fig.9;fig.10).

8. A filter as claimed in claim 7 wherein said decision means (80) is operable to detect said direction, either vertical or horizontal, by comparing:
the absolute value of the difference between the two samples ($P_4,P_6$) which are next adjacent to and on the same line (l) as each respective sample ($P_5$); and
the absolute value of the difference between the one sample ($P_2$;$P_8$) and the mean of the two samples ($P_7,P_9$; $P_1,P_3$) on the lines (l-1, l+1) immediately preceding and following each respective sample ($P_5$).

9. A filter (fig.3;fig.7) as claimed in any one of the preceding claims wherein:
said luminance component separation means (90) is arranged to receive and is operable directly both upon each respective sample ($P_4$; $P_5$) and upon the respective chrominance component (C) thereof, which chrominance component (C) is supplied from said selection means (24c).

10. A method for separating the luminance and chrominance components of a composite television/video signal, which method comprises:
sampling the signal at a frequency of four times that of the colour sub-carrier to produce a multiplicity of composite signal samples;
filtering said samples to produce both a vertical filter estimate and an horizontal filter estimate of the chrominance component of each respective sample;
determining which respective one of said vertical filter and horizontal filter estimates is to be selected as the chrominance component of each respective sample;
selecting the appropriate one of said vertical filter and horizontal filter estimates for each respective sample; and

EP 0 161 923 B1

separating the luminance component of each sample;

which method is <u>characterised in that</u> :

the selection of each estimate is determined by detecting, from said samples, that direction, either vertical or horizontal, in which the variation of the signal, in the immediate local vicinity of each respective sample, is less.

**Patentansprüche**

1. Trennungsfilter von Leuchtdichte- und Farbenkomponenten (Y und C) eines Fernseh-/Video-Signalgemischs mit:

einem Signalabtastmittel (2, 3), das das Signal mit der vierfachen Farbträgerfrequenz abtastet, um eine Vielzahl von Signalabtastwerten (P) des Signalgemischs zu erzeugen;

einem Vertikal- und Horizontalfilter (70), das die Abtastwerte (P) empfängt, um durch Bearbeitung derselben sowohl ein Vertikalfilter-Vorschlagssignal ($V_c$) als auch ein Horizontalfilter-Vorschlagssignal ($H_c$) der Farbträgerkomponente eines jeden betreffenden Abtastwertes ($P_4$; $P_5$) zu erzeugen;

einem Entscheidungsmittel (80), das entscheidet, welches von den Vertikalfilter- und Horizontalfilter-Vorschlagssignalen als Farbenkomponente (C) eines jeden betreffenden Abtastwertes ($P_4$; $P_5$) auszuwählen ist;

Auswahlmitteln (24c), die das Vertikalfilter- oder das Horizontalfilter-Vorschlagssignal ($V_c$; $H_c$) gemäß der Entscheidung der Entscheidungsmittel (80) für jeden betreffenden Abtastwert ($P_4$; $P_5$) auswählen und mit

Leuchtdichtekomponenten-Abtrennmitteln (91), die die Leuchtdichtekomponente (Y) jedes betreffenden Abtastwertes ($P_4$; $P_5$) separieren;

<u>dadurch gekennzeichnet</u>, daß das Entscheidungsmittel (80) auf eine Auswahl des Abtastwertes (P) hin betriebsbereit ist, einerseits entweder die Vertikal- oder die Horizontalrichtung festzustellen, in der die Abweichung des Signals in unmittelbarer örtlicher Nähe eines jeden betreffenden Abtastwertes ($P_4$; $P_5$) geringer ist, und andererseits dazu betriebsbereit ist, die Auswahlmittel (24c) zu veranlassen, das zugehörige betreffende Vertikalfilter-Vorschlagssignal ($V_c$) oder das Horizontalfilter-Vorschlagssignal ($H_c$) als die Farbenkomponente (C) von jedem betreffenden Abtastwert ($P_4$; $P_5$) auszuwählen.

2. Filter nach Anspruch 1, dessen Entscheidungsmittel (80) eingerichtet ist, zu empfangen, und das auf eine Auswahl ($P_1$-$P_7$) der Abtastwerte (Fig. 5; Fig. 6) hin sofort betriebsbereit ist, wobei die Auswahl jene beiden Abtastwerte ($P_3$, $P_5$) einschließt, die auf derselben Zeile (1) als nächste benachbart sind, und wobei jeder betreffende Abtastwert ($P_4$) zusammen mit den ausgewählten Abtastwerten ($P_2$, $P_6$; $P_1$, $P_7$) entweder unmittelbar benachbart oder nächst benachbart ist, und die auch auf der Zeile (1-1) sind, die unmittelbar dem betreffenden Abtastwert ($P_4$) vorangeht, und auf der Zeile (1 + 1) die unmittelbar folgt.

3. Filter nach einem der vorstehenden Ansprüche, dessen Vertikal- und Horizontalfilter (70) sowohl auf jeden Abtastwert hin als auch auf eine Auswahl ($P_1$-$P_7$) der Abtastwerte (Fig. 5; Fig. 6) hin sofort betriebsbereit ist, wobei die Auswahl jene beiden Abtastwerte ($P_3$; $P_5$) einschließt, die auf derselben Zeile (1) als nächste benachbart sind, und wobei jeder betreffende Abtastwert ($P_4$) zusammen mit den ausgewählten Abtastwerten ($P_2$, $P_6$; $P_1$, $P_7$) entweder unmittelbar benachbart oder nächst benachbart ist, und die auch auf der Zeile (1-1) sind, die unmittelbar dem betreffenden Abtastwert ($P_4$) vorausgeht und auf der Zeile (1 + 1), die unmittelbar folgt, und wobei die Farbenkomponenten (C) der Abtastwerte ($P_2$, $P_3$, $P_5$, $P_6$; $P_1$, $P_3$, $P_5$, $P_7$) der Auswahl ($P_1$-$P_7$) eine gegenüber der Phase der Farbenkomponente (C) eines jeden betreffenden Abtastwertes ($P_4$) entgegengesetzte Phasenlage aufweisen.

4. Filter nach den Ansprüchen 2 und 3, dessen Entscheidungsmittelauswahl (Fig. 5; Fig. 6) von Abtastwerten und dessen Vertikal- und Horizontalfilterauswahl von Abtastwerten die gleichen sind ($P_2$, $P_3$, $P_5$, $P_6$; $P_1$, $P_3$, $P_5$, $P_7$).

5. Filter (Fig. 3) nach Anspruch 4, dessen Signalabtastmittel (2, 3) eingerichtet ist, ein Fernseh/Video-Signalgemisch nach dem PAL-Verfahren abzutasten, um Abtastwerte des Signalgemischs zu erzeugen, die sich mit den U- und V-skalierten Farbdifferenzsignalachsen des Farbträgers decken;

und wobei sich die ausgewählten Abtastwerte ($P_2$, $P_6$; $P_1$, $P_7$), die auf der jedem betreffenden Abtastwert ($P_4$) unmittelbar vorangehenden Zeile (1-1) und der unmittelbar folgenden Zeile (1 + 1) in unmittelbarer Nachbarschaft jedes betreffenden Abtastwertes ($P_4$) auf einer Diagonale befinden.

15

**6.** Filter nach Anspruch 5, dessen Entscheidungsmittel (80) betriebsbereit ist, um entweder die vertikale oder die horizontale Richtung festzustellen, indem folgende Vergleiche durchgeführt werden:

der Absolutwert der Differenz zwischen jenen beiden Antastwerten ($P_3$, $P_5$), die auf derselben Zeile (1) als nächste einem jeden betreffenden Abtastwert ($P_4$) benachbart sind;

sowie der Absolutwert der Differenz zwischen beiden Abtastwerten ($P_2$, $P_6$; $P_1$, $P_7$), die auf der unmittelbar vorangehenden Zeile (1-1) bzw. der unmittelbar nachfolgenden Zeile (1 + 1) auf einer Diagonale unmittelbar jedem betreffenden Abtastwert ($P_4$) benachbart sind.

**7.** Filter (Fig. 7) nach Anspruch 4,

dessen Signalabtastmittel (2, 3), eingerichtet ist, ein Fernseh/Video-Signalgemisch nach dem PAL-Verfahren abzutasten, um Abtastwerte des Signalgemischs (Fig. 9; Fig. 10) zu erzeugen, die sich bei einer Achsverschiebung um ± 45° mit dem U- und V-skalierten Farbdifferenzsignalachsen des Farbträgers decken,

wobei die ausgewählten Abtastwerte ($P_2$, $P_7$, $P_9$; $P_1$, $P_3$, $P_8$) sowohl einen Abtastwert ($P_2$; $P_8$) enthalten, der jedem betreffenden Abtastwert ($P_5$) vertikal unmittelbar benachbart ist, als auch zwei Abtastwerte ($P_7$, $P_9$; $P_1$, $P_3$), die jedem betreffenden Abtastwert ($P_5$) als nächste benachbart sind, wobei sich der eine Abtastwert bzw. die beiden Abtastwerte auf der Zeile (1-1), die jedem betreffenden Abtastwert ($P_5$) unmittelbar vorangeht, und der Zeile (1 + 1), die jedem betreffenden Abtastwert ($P_5$) unmittelbar nachfolgt, befindet bzw. befinden, oder wechselweise für aufeinanderfolgende betreffende Abtastwerte (Fig. 9; Fig. 10) auf der Zeile (1 + 1), die unmittelbar folgt, und auf der Zeile (1-1), die jedem betreffenden Abtastwert ($P_5$) unmittelbar vorangeht.

**8.** Filter nach Anspruch 7, dessen Entscheidungsmittel (80) betriebsbereit ist, um entweder die vertikale oder die horizontale Richtung festzustellen, indem folgenden Vergleiche durchgeführt werden:

der Absolutwert der Differenz zwischen den beiden Abtastwerten ($P_4$, $P_6$), die auf derselben Zeile (1) als nächste jedem betreffenden Abtastwert ($P_5$) benachbart sind, sowie

der Absolutwert der Differenz zwischen dem einen Abtastwert ($P_2$; $P_8$) und dem Mittelwert aus den beiden Abtastwerten ($P_7$, $P_9$; $P_1$, $P_3$) auf den Zeilen (1-1, 1 + 1), die jedem betreffenden Abtastwert ($P_5$) unmittelbar vorangehen bzw. nachfolgen.

**9.** Filter (Fig. 3; Fig. 7) nach einem der vorstehenden Ansprüche,

dessen Leuchtdichtekomponenten-Abtrennmittel (90) eingerichtet ist zu empfangen und sowohl auf jeden betreffenden Abtastwert ($P_4$; $P_5$) hin als auch auf dessen betreffende Farbenkomponente (C) hin sofort betriebsbereit zu sein, wobei die Farbenkomponente (C) von den Auswahlmitteln (24c) geliefert wird.

**10.** Verfahren zur Trennung der Leuchtdichte- und Farbenkomponenten eines Fernseh/Video-Signalgemischs mit folgenden Verfahrensschritten:

Abtastung des Signals mit der vierfachen Farbträgerfrequenz, um eine Vielzahl von Singalabtastwerten des Signalgemischs zu erzeugen;

Filterung der Abtastwerte, um sowohl ein Vertikalfilter- als auch ein Horizontalfilter-Vorschlagssignal der Farbenkomponente von jedem betreffenden Abtastwert zu erzeugen;

Bestimmung, welches betreffende Vorschlagssignal, das des Vertikalfilters oder das des Horizontalfilters, als Farbenkomponente von jedem betreffenden Abtastwert auszuwählen ist,

Auswahl des zweckmäßigen Vertikalfilter- und Horizontalfilter-Vorschlagssignals für jeden betreffenden Abtastwert und

Abtrennung der Leuchtdichtekomponente von jedem Abtastwert

gekennzeichnet durch den Verfahrenschritt,

daß die Auswahl eines jeden Vorschlagssignals durch Feststellung entweder der Vertikal- oder der Horizontalrichtung erfolgt, in der die Abweichung des Signals in unmittelbarer örtlicher Nähe eines jeden betreffenden Abtastwertes geringer ist.

### Revendications

**1.** Filtre (figure 3, figure 7) pour séparer les composantes de luminance (Y) et de chrominance (C) d'un signal composite de télévision/vidéo, lequel filtre comprend:

un moyen d'échantillonnage de signal (2, 3) pour échantillonner le signal à une fréquence quatre fois supérieure à celle de la sous-porteuse couleur afin de produire une multiplicité d'échantillons de signal composite (P);

un moyen de filtrage vertical et horizontal (70) adapté à recevoir lesdits échantillons (P) pour produire par des opérations sur ceux-ci à la fois une estimée de filtre vertical ($V_c$) et une estimée de filtre horizontal ($H_c$) de la composante de chrominance de chaque échantillon respectif ($P_4$;$P_5$);

un moyen de décision (80) pour décider laquelle desdites estimées de filtre vertical et de filtre horizontal doit être sélectionnée en tant que composante de chrominance (C) de chaque échantillon respectif ($P_4$;$P_5$);

un moyen de sélection (24c) pour sélectionner l'une ou l'autre desdites estimées de filtre vertical et de filtre horizontal ($V_c$; $H_c$), selon la décision prise par ledit moyen de décision (80), pour chaque échantillon respectif ($P_4$;$P_5$);et

un moyen de séparation de composante de luminance (91) pour séparer la composante de luminance (Y) de chaque échantillon respectif ($P_4$;$P_5$);

ce filtre étant caractérisé en ce que:

ledit moyen de décision (80) peut agir sur une sélection desdits échantillons (P) pour détecter la direction, verticale ou horizontale, dans laquelle la variation du signal, au voisinage immédiat de chaque échantillon respectif ($P_4$;$P_5$),est la plus faible, et peut être activé en conséquence pour faire en sorte que ledit moyen de sélection (24c) sélectionne l'estimée de filtre vertical ($V_c$) ou l'estimée de filtre horizontal ($H_c$) respective correspondante en tant que composante de chrominance (C) de chaque échantillon respectif ($P_4$;$P_5$).

2. Filtre selon la revendication 1, dans lequel ledit moyen de décision (80) est adapté à recevoir et à agir directement sur une sélection ($P_1$-$P_7$) desdits échantillons (figure 5; figure 6), cette sélection étant constituée de deux échantillons ($P_3$, $P_5$) qui sont tous deux à une distance de, et sur la même ligne (1) que, chaque échantillon respectif ($P_4$), en association avec des échantillons sélectionnés ($P_2$ & $P_6$; $P_1$ & $P_7$) qui sont immédiatement adjacents à, ou distants de chaque échantillon respectif ($P_4$) et qui se trouvent également sur la ligne (l-1) précédant immédiatement, et sur la ligne (l + 1) suivant immédiatement chaque échantillon respectif ($P_4$).

3. Filtre selon l'une quelconque des revendications précédentes, dans lequel ledit moyen de filtrage vertical et horizontal (70) peut agir directement sur chaque échantillon respectif ($P_4$) et sur une sélection ($P_1$-$P_7$) desdits échantillons (figure 5; figure 6), cette sélection étant constituée des deux échantillons ($P_3$, $P_5$) qui sont tous deux distants de chaque échantillon respectif ($P_4$) et sur la même ligne (l) que celui-ci, en association avec des échantillons sélectionnés ($P_2$,$P_6$; $P_1$,$P_7$) qui sont soit immédiatement voisins, soit distants de chaque échantillon respectif ($P_4$), et qui sont également sur la ligne (l-1) précédant immédiatement et la ligne (l + 1) suivant immédiatement chaque échantillon respectif ($P_4$), et dans lequel les composantes de chrominance (C) des échantillons ($P_2$,$P_3$,$P_5$,$P_6$; $P_1$,$P_3$,$P_5$,$P_7$) de ladite sélection ($P_1$-$P_7$) sont tous en opposition de phase par rapport à la phase de la composante de chrominance (C) de chacun desdits échantillons respectifs ($P_4$).

4. Filtre selon les revendications 2 et 3, dans lequel ladite sélection desdits échantillons par le moyen de décision (figure 5; figure 6) desdits échantillons et ladite sélection par le moyen de filtrage vertical et horizontal sont identiques ($P_2$,$P_3$,$P_5$,$P_6$; $P_1$,$P_3$,$P_5$,$P_7$).

5. Filtre (figure 3) selon la revendication 4, dans lequel:

ledit moyen d'échantillonnage de signal (2,3) est adapté à échantillonner un signal composite de télévision/vidéo à codage PAL et à lignes à phases alternées, pour produire des échantillons de signal composite coïncidant avec les axes des signaux de différence de couleur normalisés U & V de la sous-porteuse couleur; et

lesdits échantillons sélectionnés ($P_2$,$P_6$; $P_1$,$P_7$) qui se trouvent sur la ligne (l-1) précédant immédiatement, et sur la ligne (l + 1) suivant immédiatement chaque échantillon respectif ($P_4$), sont immédiatement adjacents diagonalement à chaque échantillon respectif ($P_4$).

6. Filtre selon la revendication 5, dans lequel ledit moyen de décision (80) est capable de détecter ladite direction, qu'elle soit verticale ou horizontale, par comparaison:

de la valeur absolue de la différence entre les deux échantillons ($P_3$,$P_5$) qui sont distants de chaque échantillon respectif ($P_4$), et sur la même ligne (l) que celui-ci; et de la valeur absolue de la différence entre les deux échantillons ($P_2$,$P_6$; $P_1$,$P_7$) qui sont immédiatement voisins diagonalement, et qui sont respectivement sur la ligne (l-1) précédant immédiatement et sur la ligne (l + 1) suivant immédiatement chaque échantillon respectif.

7. Filtre (figure 7) selon la revendication 4, dans lequel:
ledit moyen d'échantillonnage de signal (2,3) est adapté à échantillonner un signal composite de télévision/vidéo à codage PAL à lignes à phases alternées pour produire des échantillons de signal composite (figure 9; figure 10) en coïncidence avec des axes décalés de ±45° par rapport aux axes des signaux de différence de couleur normalisés U & V de la sous-porteuse couleur; et
lesdits échantillons sélectionnés $(P_2,P_7,P_9; P_1,P_3,P_8)$ comprennent un échantillon $(P_2;P_8)$ qui est immédiatement voisin verticalement de chaque échantillon respectif $(P_5)$ et deux échantillons $(P_7,P_9; P_1,P_3)$ qui sont distants de chaque échantillon respectif $(P_5)$, dont un et deux échantillons se trouvent respectivement sur la ligne (l-1) précédant immédiatement, et sur la ligne (l+1) suivant immédiatement chaque échantillon respectif $(P_5)$, ou sur la ligne (l+1) suivant immédiatement, et sur la ligne (l-1) précédant immédiatement chaque échantillon respectif $(P_5)$ de manière alternée pour des échantillons consécutifs respectifs (figure 9; figure 10).

8. Filtre selon la revendication 7, dans lequel ledit moyen de décision (80) est capable de détecter ladite direction, qu'elle soit verticale ou horizontale, par comparaison:
de la valeur absolue de la différence entre les deux échantillons $(P_4,P_6)$ qui sont distants de chaque échantillon respectif $(P_5)$, et sur la même ligne (l) que celui-ci; et
de la valeur absolue de la différence entre l'échantillon $(P_2;P_8)$ et la moyenne des deux échantillons $(P_7,P_9; P_1,P_3)$ sur les lignes (l-1, l+1) précédant et suivant immédiatement chaque échantillon respectif $(P_5)$.

9. Filtre (figure 3; figure 7) selon l'une quelconque des revendications précédentes, dans lequel:
ledit moyen de séparation de la composante de luminance (90) est adapté à recevoir et à agir directement à la fois sur chaque échantillon respectif $(P_4;P_5)$ et sur sa composante de chrominance respective (C), cette composante de chrominance (C) étant fournie par ledit moyen de sélection (24c).

10. Procédé pour séparer les composantes de luminance et de chrominance d'un signal composite de télévision/vidéo, ce procédé consistant à:
échantillonner le signal à une fréquence quatre fois supérieure à celle de la sous-porteuse couleur pour produire une multiplicité d'échantillons de signal composite;
filtrer lesdits échantillons pour produire à la fois une estimée de filtre vertical et une estimée de filtre horizontal de la composante de chrominance de chaque échantillon respectif;
déterminer respectivement laquelle desdites estimées de filtre vertical et de filtre horizontal doit être sélectionnée en tant que composante de chrominance de chaque échantillon respectif;
sélectionner celle qui convient desdites estimées de filtre vertical et de filtre horizontal pour chaque échantillon respectif; et
séparer la composante de luminance de chaque échantillon;
ce procédé étant caractérisé en ce que:
la sélection de chaque estimée est déterminée par détection, à partir desdits échantillons, de la direction, qu'elle soit verticale ou horizontale, dans laquelle la variation du signal, au voisinage immédiat de chaque échantillon respectif, est la plus faible.

F I G 1. (PRIOR ART)

line (I-2)
line (I-1)
line (I)
line (I+1)
line (I+2)
line (I+3)

P

○ : Y-C1    △ : Y+C2    △ : Y+C1'    □ : Y+C2    C1 = U1+V1
◎ : Y-C1    ◁ : Y-C2    ◁ : Y-C1    ▨ : Y-C2    C1' = U1-V1
                                                  C2 = U2+V2
                                                  C2' = U2-V2

F I G .2.(PRIOR ART)

F I G .3.

EP 0 161 923 B1

# F I G .4.

P

--- △ --- ◯ --- △ --- ◉ --- △ --- ◯ ---    line (l-2)

--- ◯ --- △ --- ◉ --- △ --- ◯ --- △ ---    line (l-1)

--- △ --- ◉ --- △ --- ◯ --- △ --- ◉ ---    line (l)

--- ◉ --- △ --- ◯ --- △ --- ◉ --- △ ---    line (l+1)

--- △ --- ◯ --- △ --- ◉ --- △ --- ◯ ---    line (l+2)

--- ◯ --- △ --- ◉ --- △ --- ◯ --- △ ---    line (l+3)

◯ : Y+V    ◉ : Y-V    △ : Y+U    △ : Y-U

EP 0 161 923 B1

F I G 5.

# F I G .6.

line (l-2)

line (l-1)

line (l)

line (l+1)

line (l+2)

line (l+3)

EP 0 161 923 B1

FIG. 7.

EP 0 161 923 B1

F I G .8.

line (I-2)

line (I-1)

line (I)

line (I+1)

line (I+2)

line (I+3)

P

○ : Y+C1   ◎ : Y-C1   △ : Y+C2   ◁ : Y-C2

C1=U1+V1 ,   C2=U2+V2

# F I G .9.

| | | | line (1-2) |
| P1 | P2 | P3 | line (1-1) |
| P4 | P5 | P6 | line (1) |
| P7 | P8 | P9 | line (1+1) |
| | | | line (1+2) |
| | | | line (1+3) |

EP 0 161 923 B1

F I G .10.